# EUROPEAN PATENT SPECIFICATION

(11) **EP 0 593 672 B1**
(45) Date of publication and mention of the grant of the patent: **27.03.1996**
(21) Application number: 92916390.5
(22) Date of filing: 14.07.1992
(51) Int. Cl.: B65G 13/11, B65G 39/10

(54) **A ROLLER CONVEYOR**
Rollenförderer
TRANSPORTEUR A ROULEAUX

(30) Priority: 15.07.1991 DK 1349/91
(43) Date of publication of application: 27.04.1994
(73) Proprietor: ITS-COMSTORE A/S, DK-4733 Tappernöje (DK)
(72) Inventor: SOLUND, Jorgen, DK-4654 Fakse Ladeplads (DK)
(74) Representative: WITTRUP, Flemming
(86) International application number: DK9200224
(87) International publication number: WO9302000

(56) References cited:
- EP-A- 0 279 037
- FR-A- 2 428 589
- GB-A- 2 219 780
- GB-A- 2 236 732
- US-A- 3 118 529

## Description

The invention concerns a roller conveyor of the type stated in the introductory portion of claim 1 (see for instance GB-A-2 219 780).

In the use of such roller conveyors a plurality of these are generally arranged in parallel with each other so that together they form a roller conveyor assembly which is used in large storage rooms in e.g. stores for conveying articles to a location where the storesmen can conveniently unload the articles for further transport.

The object of the invention is to provide a roller conveyor which can withstand great loads, which just offers low frictional resistance and which is inexpensive to manufacture in relation thereto.

This is achieved according to the invention by the subject-matter defined in the characterizing portion of claim 1.

Thus, it is very advantageous that each roller is journalled by means of a pin at each side instead of a through shaft which will possibly be bent when loaded. It is also inexpensive and expedient that the punched material in the U-shaped profile forms bearings for these pins in the rollers.

Each roller can e.g. be loaded much more than known roller conveyors having shafts.

The rollers moreover have projections which are disposed at the outer side of the punched material in the mounted position of the rollers. If a pin should break, these projections form mounts for the rollers.

To reinforce and stiffen the roller conveyor the U-shaped profile additionally has bends as stated in claim 2. In this embodiment the roller conveyor has a reasonable stiffness to withstand loads.

If, on the other hand, the roller conveyor is to be capable of withstanding great loads, the thin metal sheet profile with the rollers is supported by means of a second U-shaped profile of a thicker metal sheet, as stated in claim 3.

To reinforce and interconnect several roller conveyors the second U-shaped profile is constructed as stated in claim 4.

The invention will be described more fully below with reference to the drawing, in which
fig. 1 is a perspective view of a short section of a roller conveyor according to the invention,
fig. 2 is a cross-section of several roller conveyors of the type shown in fig. 1 coupled together to form a large assembled rolling surface,
fig. 3 is a perspective view of a roller incorporated in the roller conveyor,
fig. 4 is an axial cross-section through the roller shown in fig. 3,
fig. 5 is a cross-section through the thin sheet metal profile in figs. 1 and 2, and
fig. 6 is a cross-section through a second embodiment of the thin sheet metal profile.

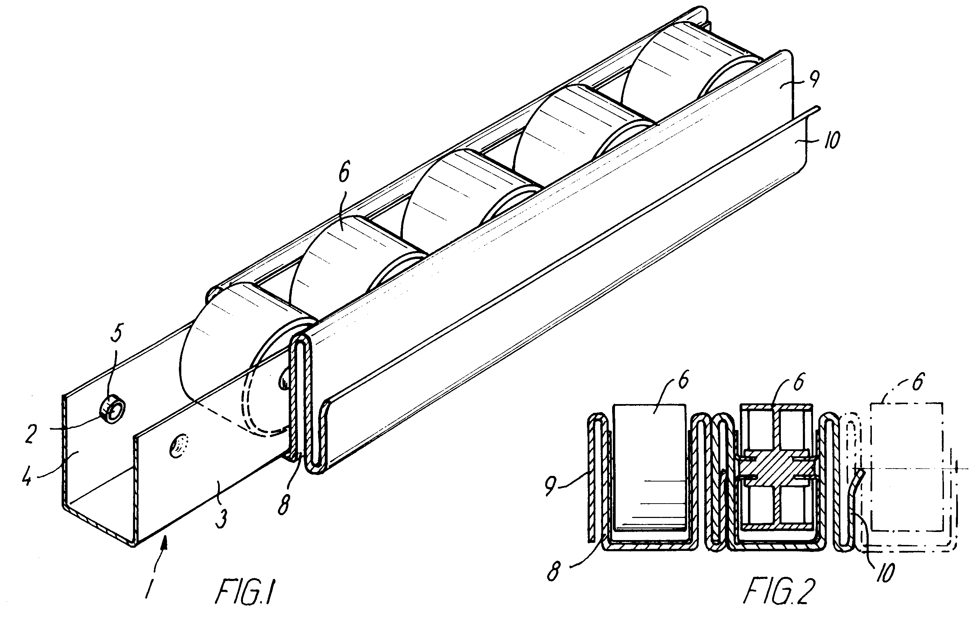

Figs. 1 and 2 show a short section of an elongate sheet metal profile 1, which is bent in U-shape, and which has two rows of holes in the U positioned opposite each other in the branches 3, 4.

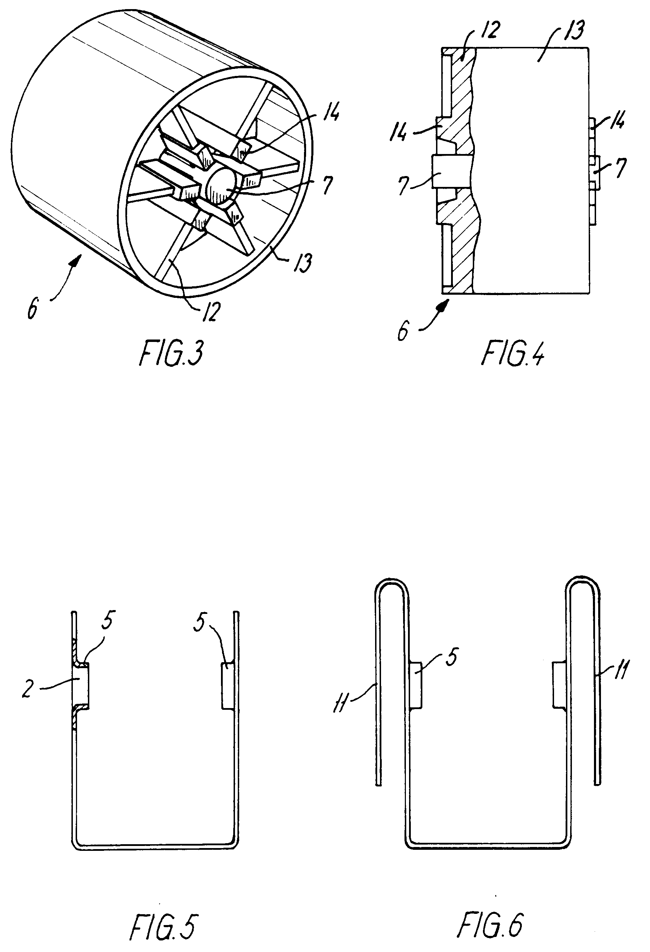

The punched material from the making of the holes 2 extends as collars 5 in a direction toward the interior of the U, as appears more clearly from figs. 5 and 6.

A plurality of closely spaced cylindrical rollers 6, which are shown in greater detail in figs. 3 and 4, are journalled with pins 7 in the holes 2.

The sheet metal profile 1 with the rollers 6 journalled in it is arranged in a second U-shaped profile 8 of a thicker and thus stiffer metal sheet, which is bent such that it fits the profile 1 with the rollers 6. This second profile 8 has additional bent parts 9, which are bent backwards from the ends of the U-shaped branches in parallel with the branches and with the same extent as the height of the branches. The bend 9 is bent back again at one side so that a part 10 is bent upwardly, as shown in figs. 1 and 2. Several roller conveyors can hereby be interconnected, as shown in fig. 2, to provide a complete roller conveyor assembly.

Instead of the mentioned second profile 8 of thicker material, the thin sheet metal profile 1 will suffice for somewhat lighter loads, when this profile per se has additional bent parts 11, as shown in fig. 6, for the necessary reinforcement and stiffening. Otherwise, the profile shown in fig. 6 is shaped in the same manner as the profile in fig. 5. Of course, the profile in fig. 6 may also have an additional bend (not shown) corresponding to the part 10 in figs. 1 and 2, so that a plurality of roller conveyors can likewise be coupled together to a complete roller conveyor assembly of a lighter structure.

As mentioned, the cylindrical rollers 6 are not shown in detail in figs. 3 and 4.

As mentioned, each roller has an axially protruding pin 7 at each side for mounting in the holes 2 or more particularly the collars 5 from the punched material. These pins 7 are connected with the cylindrical shell 13 of the roller by means of a plurality, six in the shown embodiment, of plate-shaped spokes. Each spoke 12 has a projection 14 in the vicinity of the pin 7, said projection being positioned on the outer side of the punched material or the collar 5 with respect to the pin 7.

For one thing the pins 7 can withstand a very huge load, but if one of the pins 7 should break, then the projections 14 ensure that the roller 6 remains mounted in the U-shaped profile 1.

The rollers preferably consist of a plastics material.

## Claims

1. A roller conveyor for the transport of boxes with contents or other articles and consisting of an elongate profile (1) of thin metal sheet bent in U-form and having rows of holes (2) positioned opposite to each other in the branches in the U for mounting axial pins (7), which extend outwardly from their respective sides of cylindrical rollers (6) extending with part of the cylindrical surface (13) beyond the opening formed by the U-form, **characterized** in that the holes (2) are punched such that the punched material (5) from the holes (2) extends inwardly toward the interior of the U and forms bearings, in the form of a collar, for the axial pins (7), and that the rollers (6) at each side have a plurality of projections (14) positioned on the outer side of the punched material (5) with respect to the pin (7).

2. A roller conveyor according to claim 1, **characterized** in that the profile (1) bent in U-form has additional bent parts (11) which are bent backwards from the ends of the U-shaped branches in parallel with the branches, preferably past the rows of holes.

3. A roller conveyor according to claim 1, **characterized** in that the U-shaped profile (1) with the rollers (6) is arranged in a second U-shaped profile (8) of thicker sheet metal and with the same inside dimension as the outside dimensions of the U-shaped profile (1) with the rollers (6).

4. A roller conveyor according to claim 3, **characterized** in that the second U-shaped profile (8) has additional bent parts (9) which are bent backwards from the ends of the U-shaped branches in parallel with the branches, substantially with the same extent as the height of the branches, and that the bend is moreover bent back again at least on one side in parallel with the side.

## Patentansprüche

1. Rollenförderer für den Transport von Behältnissen mit Inhalt oder anderen Gegenständen, der aus einem länglichen Profil (1) aus Dünnblech besteht, das in U-Form gebogen ist und Reihen von Löchern (2) im U hat, die in den Schenkein entgegengesetzt zueinander angebracht sind, um axiale Stifte (7) zu montieren, die sich von ihren entsprechenden Seiten von zylindrischen Rollen (6) nach außen erstrecken, wobei sich ein Teil der zylindrischen Fläche (13) über die durch die U-Form ausgebildete Öffnung hinaus erstreckt,
**dadurch gekennzeichnet**, daß
die Löcher (2) gelocht sind, so daß sich das gelochte Material (5) von den Löchern (2) zum Inneren des U nach innen erstreckt und Lager in der Form einer Buchse für die axialen Stifte (7) bildet, und daß
die Rollen (6) an jeder Seite eine Vielzahl von Vorsprüngen (14) haben, die sich bezüglich des Stiftes (7) an der Außenseite des gelochten Material (5) befinden.

2. Rollenförderer nach Anspruch 1, der dadurch gekennzeichnet ist, daß das Profil (1), das in U-Form gebogen ist, zusätzliche gekrümmte Teile (11) hat, die von den Enden der U-förmigen Schenkel parallel zu den Schenkel vorzugsweise an den Reihen von Löchern vorbei zurückgebogen sind.

3. Rollenförderer nach Anspruch 1, der dadurch gekennzeichnet ist, daß das U-förmige Profil (1) mit den Rollen (6) in einem zweiten U-förmigen Profil (8) aus dickerem Blech und mit der gleichen Innenabmessung wie die Außenabmessungen des U-förmigen Profils (1) mit den Rollen (6) angeordnet ist.

4. Rollenförderer nach Anspruch 3, der dadurch gekennzeichnet ist, daß das zweiten U-förmige Profil (8) zusätzliche gekrümmte Teile (9) hat, die von den Enden der U-förmigen Schenkel parallel zu den Schenkeln im wesentlichen über die gleiche Ausdehnung wie die Höhe der Schenkel zurückgebogen sind, und daß die Krümmung darüber hinaus erneut zumindest an einer Seite parallel zu der Seite zurückgebogen ist.

## Revendications

1. Convoyeur à rouleaux pour le transport de boîtes ayant un contenu, ou d'autres articles, composé d'un profilé allongé (1) réalisé en tôle mince pliée en forme de U, et comportant deux rangées de perçages (2) positionnées en face l'une de l'autre dans les branches du U, pour le montage de broches axiales (7) qui s'étendent vers l'extérieur à partir des côtés respectifs de rouleaux cylindriques (6) dont une partie de la surface cylindrique (13) fait saillie par rapport à l'ouverture formée par la forme en U, caractérisé en ce que les perçages (2) sont réalisés par poinçonnage de manière telle que la matière poinçonnée (5) des perçages (2) s'étende vers l'intérieur, en direction de l'intérieur du U, et forme des paliers en forme de collerettes pour les broches axiales (7), et en ce que les rouleaux (6) comportent, de chaque côté, plusieurs saillies (14) positionnées à l'extérieur de la matière poinçonnée (5), par rapport à l'axe (7).

2. Convoyeur à rouleaux selon la revendication 1, caractérisé en ce que le profilé (1) plié en forme de U comporte des parties repliées supplémentaires (11), qui sont repliées en arrière à partir des extrémités des branches en U, parallèlement à ces branches, de préférence jusqu'au-delà des rangées de perçages.

3. Convoyeur à rouleaux selon la revendication 1, caractérisé en ce que le profilé (1) en forme de U, pourvu des rouleaux (6), est disposé dans un deuxième profilé (8) en forme de U, réalisé en une tôle plus épaisse et présentant des dimensions intérieures égales aux dimensions extérieures du profilé (1) en forme de U portant les rouleaux (6).

4. Convoyeur à rouleaux selon la revendication 3, caractérisé en ce que le deuxième profilé (8) en forme de U comporte des parties repliées supplémentaires (9), qui sont rabattues en arrière à partir des extrémités des branches en U, parallèlement à ces branches, sur une distance substantiellement égale à la hauteur de ces branches, et en ce que le rabat est en outre plié à nouveau sur au moins un côté, parallèlement à ce côté.
